(19) Europäisches Patentamt
European Patent Office
Office européen des brevets

(11) **EP 4 786 440 A1**

(12) **EUROPEAN PATENT APPLICATION**
published in accordance with Art. 153(4) EPC

(43) Date of publication:
05.08.2026 Bulletin 2026/32

(21) Application number: 24872264.7

(22) Date of filing: 25.09.2024

(51) International Patent Classification (IPC):
*C04B 35/486* (2006.01)  *B09B 3/35* (2022.01)
*B09B 3/40* (2022.01)  *C01G 25/02* (2006.01)

(52) Cooperative Patent Classification (CPC):
C04B 35/62204; B09B 3/35; B09B 3/40;
C01G 25/02; C04B 35/486; C01P 2002/76;
C01P 2004/03; C01P 2004/61; C01P 2004/62;
C01P 2006/12; C04B 2235/3206; C04B 2235/3208;
C04B 2235/3224; C04B 2235/3225;
C04B 2235/3229;                          (Cont.)

(86) International application number:
PCT/JP2024/034151

(87) International publication number:
WO 2025/070478 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 JP 2023164193

(71) Applicant: Tosoh Corporation
Shunan-shi, Yamaguchi 746-8501 (JP)

(72) Inventors:
• HIGUCHI, Yuya
Shunan-shi Yamaguchi 746-8501 (JP)

• TSUCHIYA, Satoshi
Shunan-shi Yamaguchi 746-8501 (JP)
• SHIMIZU, Takahiro
Shunan-shi Yamaguchi 746-8501 (JP)
• KAWAMURA, Kiyotaka
Shunan-shi Yamaguchi 746-8501 (JP)
• NAKAMURA, Keisuke
Shunan-shi Yamaguchi 746-8501 (JP)

(74) Representative: Müller-Boré & Partner
Patentanwälte PartG mbB
Friedenheimer Brücke 21
80639 München (DE)

(54) **METHOD FOR RECYCLING SINTERED OBJECT**

(57) To provide at least one of a method for recycling a zirconia sintered body that enables recycling of a zirconia sintered body that is difficult to be converted into powder by pulverization, a powder obtained thereby and a use thereof.

A powder of zirconia composed of crystal grains. Such a powder is preferably obtained by a production method including a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

FIG. 1

(52) Cooperative Patent Classification (CPC): (Cont.)
C04B 2235/3246; C04B 2235/5409;
C04B 2235/5436; C04B 2235/5445;
C04B 2235/6562; C04B 2235/6567;
C04B 2235/662; C04B 2235/76; C04B 2235/765;
C04B 2235/77; C04B 2235/96

**Description**

TECHNICAL FIELD

The present disclosure relates to recycling of a zirconia sintered body and to the resultant recycled zirconia.

BACKGROUND ART

From the viewpoint of the Sustainable Development Goals (SDGs), regeneration and reuse of resources have been demanded in recent years. However, ceramics including zirconia (zirconium dioxide, $ZrO_2$) have very high mechanical properties and chemical stability and are very difficult to recycle. Accordingly, post-use ceramics (sintered bodies) are only partly used as cement raw materials and the like and the majority thereof are disposed of. On the other hand, recycling of zirconia sintered bodies has been studied.

For example, Patent Document 1 has disclosed a method in which a sheet-shaped zirconia sintered body is subjected to pulverization and fine-sizing and is recycled as a sintered body raw material. Furthermore, Patent Document 2 has proposed a method in which a zirconia sintered body and water are heat-treated to convert the zirconia into a sol, to thereby recycle the sintered body.

PRIOR ART DOCUMENTS

PATENT DOCUMENTS

Patent Document 1: JP-A-2009-263157
Patent Document 2: JP-A-H10-218662

DISCLOSURE OF INVENTION

TECHNICAL PROBLEM

Zirconia sintered bodies are generally dense and, because of the high mechanical strength thereof, fine-sizing by pulverization is very difficult. As disclosed in Patent Document 1, pulverization of a three-dimensional sintered body having a size or thickness of 1 mm or more is poor in energy efficiency and the pulverization causes ingress of impurities. Therefore, the method of Patent Document 1 was applicable only to extremely thin zirconia sintered bodies having a thickness of less than 1 mm. In addition, the recycling specifically disclosed in Patent Document 1 was only recycling of a sheet-shaped sintered body of cubic zirconia having a thickness of less than 300 $\mu$m and low mechanical strength. According to Patent Document 2, crystal grains constituting zirconia balls were dissolved to provide a fine sol, which was molded and sintered. However, Patent Document 2 does not disclose specific data such as observation images or X-ray diffraction patterns. Furthermore, the present inventors performed studies and have found that the method of Patent Document 2 not only fails to provide a sol, but also does not change the properties of the zirconia balls at all before and after the treatment. Therefore, the method of Patent Document 2 cannot achieve recycling of the zirconia sintered body.

An object of the present disclosure is to provide at least one of a method for recycling a zirconia sintered body that enables recycling of a zirconia sintered body that is difficult to be converted into powder by pulverization, a powder obtained thereby and a use thereof.

SOLUTION TO PROBLEM

For the present disclosure, studies were performed on recycling of a zirconia sintered body having a thickness of 1 mm or more, which has been considered difficult to be converted into powder by pulverization. As a result, it has been found that the sintered body subjected to hydrothermal treatment under predetermined conditions can be deagglomerated and can be converted into powder. Furthermore, it has been found that the resultant powder can be used as a recycled powder serving as a raw material for a sintered body.

Specifically, the present invention is as described in the claims and the gist of the present disclosure is as follows.

[1] A powder of zirconia composed of crystal grains.
[2] The powder according to [1], having a BET specific surface area of 0.5 $m^2$/g or more and 10.5 $m^2$/g or less and a median size of 0.2 $\mu$m or more and 2.0 $\mu$m or less.

[3] The powder according to [1] or [2], wherein the zirconia is zirconia containing a stabilizing element.

[4] The powder according to [3], wherein the stabilizing element is one or more from the group consisting of yttrium, magnesium, calcium, cerium, gadolinium and erbium.

[5] The powder according to [3] or [4], wherein a content of the stabilizing element is 1.5 mol% or more and 6 mol% or less.

[6] The powder according to any one of [1] to [5], having a monoclinic phase fraction of 50% or more.

[7] The powder according to any one of [1] to [6], wherein a BET specific surface area relative to a median size is 12 $m^2/(g \cdot \mu m)$ or less.

[8] The powder according to any one of [1] to [7], wherein the powder is a recycled powder.

[9] A production method for the powder according to any one of [1] to [8], the production method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

[10] The production method according to [9], wherein the zirconia sintered body is a sintered body having tetragonal zirconia as a main phase.

[11] The production method according to [9] or [10], wherein a fraction of a monoclinic phase in a crystalline phase of the zirconia sintered body is 5% or less.

[12] The production method according to any one of [9] to [11], wherein the zirconia sintered body has a three-point bending strength of 1000 MPa or more.

[13] A method for recycling a sintered body, the method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

ADVANTAGEOUS EFFECTS OF INVENTION

The present disclosure can provide at least one of a method for recycling a zirconia sintered body that enables recycling of a zirconia sintered body that is difficult to be converted into powder by pulverization, a powder obtained thereby and a use thereof.

BRIEF DESCRIPTION OF DRAWINGS

[Fig. 1] an SEM observation image of a sintered body of Synthesis Example 1 (the scale bar in the drawing represents 1 $\mu m$)

[Fig. 2] an optical microscope observation image of sintered body flakes of Example 1 (the scale bar in the drawing represents 1000 $\mu m$)

[Fig. 3] an SEM observation image of a powder of Example 1 (the scale bar in the drawing represents 1 $\mu m$)

[Fig. 4] an SEM observation image of a powder of Example 2 (the scale bar in the drawing represents 1 $\mu m$)

DESCRIPTION OF EMBODIMENTS

Hereinafter, the sintered body of the present disclosure will be described with reference to examples of an embodiment. Terms in the present embodiment are as described below. The present disclosure encompasses any combinations of the features and parameters disclosed herein and encompasses any combinations of upper limits and lower limits of values disclosed herein.

The term "composition" refers to a substance that has a certain formulation and that may be, for example, one or more selected from the group consisting of a powder, granules, a green body, a calcined body and a sintered body.

The term "powder" refers to a composition that is an assembly of powder particles and has fluidity. The term "zirconia powder" refers to a powder essentially composed of zirconia and a powder having zirconia as the main component.

The term "green body" refers to a composition having a fixed shape composed of powder particles aggregated by a physical force and particularly refers to a composition that has been formed to have the shape (for example, after molding) and that is not heat-treated. The term "zirconia green body" refers to a green body essentially composed of zirconia or a green body having zirconia as the matrix (base material). In the present embodiment, the terms "green body" and "compacted body" are used interchangeably.

The term "sintered body" refers to a composition having a fixed shape composed of crystal grains and a composition having been heat-treated at a temperature equal to or higher than the sintering temperature. The shape of the sintered body in the present embodiment may be, for example, at least one selected from the group consisting of spherical, substantially spherical, elliptical, disk-shaped, cylindrical, cubic, rectangular parallelepiped, polyhedral and substantially polyhedral shapes. Furthermore, any shape can be used as long as a predetermined purpose in various applications and the like is achieved. The term "zirconia sintered body" refers to a sintered body essentially composed of zirconia or a sintered body having zirconia as the matrix (base material).

The term "stabilizing element" refers to an element having a function of dissolving in zirconia to thereby stabilize the crystalline phase of zirconia.

The term "BET specific surface area" refers to a value measured in accordance with JIS R 1626 by a BET multipoint method (5 points) using nitrogen as an adsorption gas. Specific measurement conditions of the BET specific surface area can be, for example, the following conditions.

Adsorption medium: $N_2$
Adsorption temperature: -196°C
Pretreatment conditions: degassing treatment at 250°C for 1 hour or more in air atmosphere
The BET specific surface area can be measured using a general apparatus (for example, TriStar II 3202, manufactured by SHIMADZU CORPORATION).

The term "median size" and the term "volume average size" respectively refer to the particle size ($D_{50}$ size) corresponding to a cumulative frequency of 50% and the average size in a cumulative volume particle size distribution obtained by particle size distribution measurement on a volume basis by a laser diffraction and scattering method. The term "standard deviation" refers to one of indices indicating the width of a particle size distribution and a value obtained by the following equation using the particle size ($D_{16}$) corresponding to a cumulative frequency of 16% and the particle size ($D_{84}$) corresponding to a cumulative frequency of 84% in the above-described cumulative volume particle size distribution.

$$\text{Standard deviation [μm]} = (D_{84} \text{ [μm]} - D_{16} \text{ [μm]})/2$$

The particle size distribution measurement on a volume basis by the laser diffraction and scattering method can be carried out under the following conditions using a general particle size distribution measuring apparatus (for example, apparatus name: MT-3300EXII, manufactured by MicrotracBEL Corp.).

Measurement range: 0.01 to 2000 μm
Particle refractive index: 2.17
Particle transmissivity: transmissive
Particle shape: non-spherical
Solvent refractive index: 1.333
Calculation mode: HRA
Measurement time: 30 seconds
Distribution: volume

The term "monoclinic phase fraction" refers to the fraction of a monoclinic phase in the crystalline phase and a value obtained from an X-ray diffraction (hereafter also referred to as "XRD") pattern by the following equation.

$$f_M = 100 \times [I_m(111) + I_m(11\text{-}1)]$$

$$/ [I_m(111) + I_m(11\text{-}1) + I_t(111) + I_c(111)]$$

In the above equation, $f_M$ is a monoclinic phase fraction, $I_t(111)$ is the integrated intensity of the tetragonal (111) plane, $I_c(111)$ is the integrated intensity of the cubic (111) plane, $I_m(111)$ is the integrated intensity of the monoclinic (111) plane and $I_m(11\text{-}1)$ is the integrated intensity of the monoclinic (11-1) plane.

The integrated intensity of each crystal plane can be determined by performing profile fitting, using a split pseudo-Voigt function, on an XRD pattern having been subjected to smoothing processing and background removal processing. The analyses of the XRD pattern such as smoothing processing, background processing and calculation of integrated intensity can be performed using an analysis program provided with an X-ray diffractometer (for example, integrated powder X-ray analysis software PDXL Ver. 2.2, manufactured by RIGAKU Corporation).

The XRD pattern in the present embodiment is preferably obtained by XRD measurement under the following conditions.

Radiation source: CuKα radiation (λ = 0.15418 nm)
Measurement mode: continuous scan
Scan speed: 2°/min
Measurement range: 2θ = 26° to 33°
Acceleration voltage/current: 40 mA and 40 kV
Divergence height limiting slit: 10 mm
Divergence/incident slit: 1°
Receiving slit: open
Detector: semiconductor detector (D/teX Ultra)
Filter: Ni filter
Goniometer radius: 185 mm

The XRD measurement can be performed using a general X-ray diffractometer (for example, Ultima IV, manufactured by RIGAKU Corporation). Note that when the composition is a calcined body or a sintered body, the surface thereof can be polished to a surface roughness Ra ≤ 0.02 μm and the surface can be subjected to XRD measurement.

XRD peaks corresponding to crystal planes of zirconia measured in the above-described XRD measurement may be XRD peaks having peak tops at the following 2θ.

XRD peak corresponding to monoclinic (111) plane: 2θ = 31 ± 0.5°
XRD peak corresponding to monoclinic (11-1) plane: 2θ = 28 ± 0.5°
XRD peak corresponding to tetragonal (111) plane: 2θ = 30 ± 0.5°
XRD peak corresponding to cubic (111) plane: 2θ = 30 ± 0.5°

The XRD peak corresponding to the tetragonal (111) plane and the XRD peak corresponding to the cubic (111) plane are measured as one overlapping peak. Therefore, $I_t(111) + I_c(111)$ in the above equation can be determined from the integrated intensity of one XRD peak having a peak top at 2θ = 30 ± 0.5°.

The term "three-point bending strength" refers to a value determined by a three-point bending test in accordance with JIS R 1601. The measurement can be carried out using a column-shaped sintered body sample having a width of 4 mm and a thickness of 3 mm, with a distance between supporting points set to 30 mm. The average value of 10 measurements can be defined as the three-point bending strength in the present embodiment.

The term "normal-pressure sintering" refers to a method in which an object to be sintered (such as a green body or a calcined body) is sintered by heating without applying an external force during sintering.

[Powder]

The present embodiment relates to a powder of zirconia and a powder of zirconia composed of crystal grains. The crystal grains are zirconia grains that have been heat-treated at a temperature equal to or higher than the sintering temperature and are zirconia grains constituting a sintered body. The sintered body is composed of crystal grains and is a composition having a fixed shape due to formation of crystal grain boundaries (interfaces) between the crystal grains. In contrast, the powder of the present embodiment is a powder in which crystal grains constituting a sintered body are dispersed. In other words, the powder of the present embodiment is a powder obtained by separation between interfaces (crystal grain boundaries) between the crystal grains constituting the sintered body. Note that the crystal grains can be dispersed even when the crystal grain boundaries are not completely eliminated. Therefore, the powder of the present embodiment may contain grains having crystal grain boundaries. The powder of the present embodiment may be regarded as a powder in which crystal grains are powder particles or a powder composed of sintered grains (sintered powder).

Other aspects of the powder of the present embodiment include a powder in which a zirconia sintered body is deagglomerated, a powder in which a zirconia sintered body is hydrothermally treated and deagglomerated and a powder obtained by a production method for the powder of the present embodiment described later.

Such a powder is obtained by reprocessing of a sintered body, that is, recycling (resource recovery) of a sintered body. Therefore, the powder of the present embodiment can also be regarded as a recycled powder (a recycled powder of zirconia).

Powders of zirconia industrially used are powders obtained by liquid-phase methods such as a coprecipitation method and a hydrolysis method (hereafter also conveniently referred to as "synthetic powders"). The synthetic powders are synthesized without undergoing a thermal history at a temperature equal to or higher than the sintering temperature and hence are powders composed of fine primary particles or secondary particles that are aggregates thereof. The synthetic powders are composed of particles including a large number of voids and have a larger specific surface area relative to the particle size than the powder of the present embodiment. For example, a synthetic powder having a particle size similar to that of the powder of the present embodiment has a large BET specific surface area and, conversely, a synthetic powder having a small specific surface area has a large particle size. In contrast, the powder of the present embodiment is a powder in which crystal grains constituting a sintered body are dispersed. Therefore, individual particles (crystal grains) constituting the powder of the present embodiment are dense and inferentially the specific surface area relative to the particle size is small. This inferentially results in the powder of the present embodiment having both a large particle size and a small specific surface area as compared with synthetic powders. Moreover, in contrast to synthetic powders having a substantially spherical shape or another irregular shape, the powder particles 8 crystal grains) constituting the powder of the present embodiment may include polyhedral particles. Therefore, the powder of the present embodiment may include polyhedral powder particles (crystal grains) or may be composed of polyhedral powder particles.

The powder of the present embodiment is a powder of zirconia and is a powder having zirconia as the main component (so-called zirconia powder). The zirconia is preferably zirconia containing a stabilizing element (stabilized zirconia).

The stabilizing element can be any element that stabilizes the crystalline phase of zirconia, may be, for example, one or more from the group consisting of yttrium (Y), magnesium (Mg), calcium (Ca), cerium (Ce), gadolinium (Gd) and erbium (Er), is preferably one or more selected from the group consisting of yttrium, magnesium, calcium, gadolinium and erbium, and more preferably at least one of yttrium and gadolinium. The powder of the present embodiment is preferably obtained from a sintered body having tetragonal zirconia as the main phase and the stabilizing element preferably includes yttrium and more preferably is yttrium alone.

The content of the stabilizing element (hereafter also referred to as a "stabilizing element amount"; when the stabilizing element is, for example, yttrium, also referred to as a "yttrium amount") can be an amount at which the crystalline phase of zirconia is stabilized in at least one of a tetragonal phase and a cubic phase and may be, for example, 1 mol% or more and 10 mol% or less, or 1.6 mol% 4.5 mol% or less. In order to obtain a sintered body having a tetragonal phase as the main phase, the yttrium amount is preferably 1.5 mol% or more, 2 mol% or more, or 2.5 mol% or more, preferably less than 6 mol%, 5.5 mol% or less, or 3.8 mol% or less and preferably 1.5 mol% or more and less than 6 mol%, 2 mol% or more and 5.5 mol% or less, or 2.5 mol% or more and 3.8 mol% or less.

The stabilizing element amount is the ratio [mol%] of the content [mol] of the stabilizing element in terms of oxide to the total content [mol] of zirconia and the stabilizing element in terms of oxide. Such oxides are $Y_2O_3$ for yttrium, MgO for magnesium, CaO for calcium, $CeO_2$ for cerium, $Gd_2O_3$ for gadolinium and $Er_2O_3$ for erbium.

The powder of the present embodiment may contain one or more selected from the group consisting of alumina, silica and germania (hereafter also referred to as an "additive component"). The additive component is preferably alumina.

The content of the additive component (hereafter also referred to as an "additive component amount"; when the additive component is alumina or the like, also referred to as an "alumina amount" or the like) may be 0 mass% or more, more than 0 mass% or 0.01 mass% or more, may be 0.5 mass% or less, 0.3 mass% or less, 0.1 mass% or less, or 0.75 mass% or less and may be, for example, 0 mass% or more and 0.75 mass% or less, more than 0 mass% and 0.75 mass% or less, or 0.01 mass% or more and 0.5 mass% or less. In view of high versatility and ease of mixing with various synthetic powders, the powder of the present embodiment preferably does not contain the additive component (the additive component amount is 0 mass%) and, for the same reason, more preferably does not contain at least silica. The silica amount of the powder of the present embodiment in consideration of measurement error and the like may be, for example, 0 mass% or more and 0.01 mass% or less, or 0 mass% or more and 0.005 mass% or less. The additive component amount of the powder of the present embodiment may be, for example, 0 mass% or more and 0.3 mass% or less, 0 mass% or more and 0.2 mass% or less, 0 mass% or more and 0.1 mass% or less, or 0 mass% or more and less than 0.05 mass%.

The additive component amount in the present embodiment is the ratio [mass%] of the content [g] of the additive component in terms of oxide to the total content (hereafter also referred to as a "metal amount") [g] of zirconia and metal elements in terms of oxide. Such oxides are $Al_2O_3$ for alumina, $SiO_2$ for silica and $Ge_2O_3$ for germania.

The powder of the present embodiment preferably does not contain an impurity, but may contain an impurity as long as advantageous effects are not impaired. In particular, the powder of the present embodiment may contain hafnia ($HfO_2$), which is an unavoidable impurity of zirconia. Note that, in the present embodiment, values derived from the formulation such as density can be calculated such that hafnia ($HfO_2$) is regarded as zirconia ($ZrO_2$).

For example, when the powder of the present embodiment is a powder composed of zirconia crystal grains containing alumina and stabilized with yttria, the formulation can be determined as follows.

$$\text{Metal amount [g]}$$

$$= ZrO_2 + Y_2O_3 + Al_2O_3$$

Alumina amount [mass%]

$$= \{Al_2O_3/(ZrO_2 + Y_2O_3 + Al_2O_3)\} \times 100$$

Stabilizing element amount (= yttrium amount) [mol%]

$$= \{Y_2O_3/(ZrO_2 + Y_2O_3)\} \times 100$$

The powder of the present embodiment is preferably a powder of zirconia including a monoclinic phase in the crystalline phase and is preferably a powder of zirconia having a monoclinic phase as the main phase. The monoclinic phase fraction of the powder of the present embodiment may be more than 50%, 70% or more, or 75% or more, may be less than 100%, 98% or less, 85% or less, or 82% or less and is preferably more than 50% and less than 100%, 70% or more and 98% or less, 75% or more and 85% or less, or 75% or more and 82% or less. On the other hand, the monoclinic phase fraction may be 86% or more and less than 100%, or 90% or more and 99% or less. Cubic zirconia does not undergo a change in the crystalline phase due to an external force such as deagglomeration whereas tetragonal zirconia undergoes phase transition due to an external force such as deagglomeration, thereby generating monoclinic zirconia. The monoclinic phase in the powder of the present embodiment is preferably a crystal phase generated by phase transition from the tetragonal phase and the powder of the present embodiment is particularly preferably a powder of zirconia obtained from a zirconia sintered body containing tetragonal zirconia.

The powder of the present embodiment preferably has a median size of 0.2 $\mu$m or more and 2.0 $\mu$m or less. When the median size is 0.2 $\mu$m or more, aggregation between powder particles is further suppressed. On the other hand, when the median size is 2.0 $\mu$m or less, the resultant sintered body tends to have a high density. The median size of the powder of the present embodiment may be more than 0.2 $\mu$m, 0.4 $\mu$m or more, 0.5 $\mu$m or more, or 0.7 $\mu$m or more, may be 1.5 $\mu$m or less, 1.0 $\mu$m or less, or 0.8 $\mu$m or less and is preferably 0.2 $\mu$m or more and 1.5 $\mu$m or less, more than 0.2 $\mu$m and 1.5 $\mu$m or less, 0.4 $\mu$m or more and 1.5 $\mu$m or less, or 0.7 $\mu$m or more and 0.8 $\mu$m or less.

The powder of the present embodiment is preferably constituted by particles having a uniform distribution and preferably has a volume average size [$\mu$m] relative to the median size [$\mu$m] (hereafter also referred to as a "particle size ratio") of preferably 0.9 or more and 1.5 or less, or 0.95 or more and 1.1 or less. The volume average size is one of indices indicating the particle sizes of powder particles in a dispersed state; when the powder of the present embodiment satisfies the above-described particle size ratio, the volume average size is preferably similar to the median size, may be, for example, 0.2 $\mu$m or more, more than 0.2 $\mu$m, 0.4 $\mu$m or more, 0.5 $\mu$m or more, or 0.7 $\mu$m or more, may be 2.0 $\mu$m or less, 1.5 $\mu$m or less, 1.0 $\mu$m or less, or 0.8 $\mu$m or less and is preferably 0.2 $\mu$m or more and 1.5 $\mu$m or less, more than 0.2 $\mu$m and 1.5 $\mu$m or less, 0.4 $\mu$m or more and 1.5 $\mu$m or less, or 0.7 $\mu$m or more and 0.8 $\mu$m or less. The volume average size is preferably larger than the median size.

The powder of the present embodiment preferably has a small width of particle size distribution and the absolute value of the standard deviation is preferably 0.5 $\mu$m or less, 0.25 $\mu$m or less, or 0.2 $\mu$m or less. The standard deviation is preferably small and is ideally 0 $\mu$m. However, the distribution actually has a width and the absolute value of the standard deviation may be more than 0 $\mu$m or 0.05 $\mu$m or more and may be, for example, more than 0 $\mu$m and 0.5 $\mu$m or less, 0.05 $\mu$m or more and 0.25 $\mu$m or less, or 0.05 $\mu$m or more and 0.2 $\mu$m or less.

The powder of the present embodiment has a BET specific surface area of preferably 0.5 $m^2$/g or more and 10.5 $m^2$/g or less and preferably 0.5 $m^2$/g or more and 10 $m^2$/g or less. The powder of the present embodiment has a relatively large particle size, but has a small BET specific surface area. The BET specific surface area of the powder of the present embodiment may be 1 $m^2$/g or more, or more, 2 $m^2$/g or more, or 3 $m^2$/g or more, may be 8 $m^2$/g or less, 5 $m^2$/g or less, or 4 $m^2$/g or less and is preferably 0.5 $m^2$/g or more and 8 $m^2$/g or less, 2 $m^2$/g or more and 8 $m^2$/g or less, or 2 $m^2$/g or more and 4 $m^2$/g or less.

The powder of the present embodiment preferably has both a large particle size and a small specific surface area and the BET specific surface area [$m^2$/g] relative to the median size [$\mu$m] (hereafter also referred to as a "BET ratio") may be 12 $m^2$/(g$\cdot$$\mu$m) or less, 9.5 $m^2$/(g$\cdot$$\mu$m) or less, or 5 $m^2$/(g$\cdot$$\mu$m) or less, may be 0 $m^2$/(g$\cdot$$\mu$m) or more, more than 0 $m^2$/(g$\cdot$$\mu$m), or 2 $m^2$/(g$\cdot$$\mu$m) or more and may be, for example, 0 $m^2$/(g$\cdot$$\mu$m) or more and 12 $m^2$/(g$\cdot$$\mu$m) or less, more than 0 $m^2$/(g$\cdot$$\mu$m) and 9.5 $m^2$/(g$\cdot$$\mu$m) or less, or more than 2 $m^2$/(g$\cdot$$\mu$m) and 5 $m^2$/(g$\cdot$$\mu$m) or less.

[Powder composition]

The powder of the present embodiment, which may be directly used as a raw material for a sintered body, is suitable as a raw material for a powder composition including the powder and a synthetic powder (hereafter also referred to as a "powder composition of the present embodiment"). Furthermore, the powder composition of the present embodiment may be used as a raw material for a sintered body.

The powder composition of the present embodiment can include the above-described powder of the present embodiment and an appropriate synthetic powder. For example, the powder composition of the present embodiment may be a powder composition including two or more powders, the powders including at least the powder of the present embodiment, and having a BET specific surface area relative to the median size (BET ratio) of more than 9.5 $m^2/(g \cdot \mu m)$. As other embodiments, the powder composition of the present embodiment may be a powder composition including the powder of the present embodiment and a zirconia powder having a BET specific surface area relative to the median size of more than 12 $m^2/(g \cdot \mu m)$, or may be a powder composition including the powder of the present embodiment and a zirconia powder having a BET ratio of more than 12 $m^2/(g \cdot \mu m)$, and having a BET ratio of more than 9.5 $m^2/(g \cdot \mu m)$.

The powder composition of the present embodiment can have a formulation similar to that of the powder of the present embodiment and is preferably a powder composition of zirconia in which the zirconia is zirconia containing a stabilizing element.

The stabilizing element can be any element that stabilizes the crystalline phase of zirconia, can be, for example, one or more from the group consisting of yttrium, magnesium, calcium, cerium, gadolinium and erbium, is preferably one or more selected from the group consisting of yttrium, magnesium, calcium, gadolinium and erbium, more preferably at least one of gadolinium and yttrium, preferably includes yttrium and more preferably is yttrium alone.

The stabilizing element amount can be an amount at which the crystalline phase of zirconia is stabilized in at least one of a tetragonal phase and a cubic phase and may be, for example, 1 mol% or more and 10 mol% or less, or 1.6 mol% 4.5 mol% or less. In order to provide a suitable raw material for a sintered body having higher mechanical properties, the yttrium amount is preferably 1.5 mol% or more, 2 mol% or more, or 2.5 mol% or more, preferably less than 6 mol%, 5.5 mol% or less, or 3.8 mol% or less and preferably 1.5 mol% or more and less than 6 mol%, 2 mol% or more and 5.5 mol% or less, or 2.5 mol% or more and 3.8 mol% or less.

The powder composition of the present embodiment may contain an additive component and the additive component is preferably alumina. The additive component amount may be 0 mass% or more, more than 0 mass%, or 0.01 mass% or more, may be 0.5 mass% or less, 0.1 mass% or less, or 0.75 mass% or less and can be, for example, 0 mass% or more and 0.75 mass% or less, more than 0 mass% and 0.75 mass% or less, or 0.01 mass% or more and 0.5 mass% or less.

The BET ratio of the powder composition of the present embodiment varies depending on the blending amount of the synthetic powder, but can be, for example, more than 9.5 $m^2/(g \cdot \mu m)$ and can be, for example, 9.5 $m^2/(g \cdot \mu m)$ or more and 15.0 $m^2/(g \cdot \mu m)$ or less, 9.5 $m^2/(g \cdot \mu m)$ or more and 13.5 $m^2/(g \cdot \mu m)$ or less, or 10.0 $m^2/(g \cdot \mu m)$ or more and 15.0 $m^2/(g \cdot \mu m)$ or less.

When the powder composition of the present embodiment has the above-described BET ratio, the powder composition exhibits moldability and sinterability similar to those of the synthetic powder and thus the powder composition can be used as a raw material for a sintered body. Therefore, the particle size and the specific surface area can be any values intended.

The BET specific surface area of the powder composition of the present embodiment can be, for example, 5 $m^2/g$ or more or 6 $m^2/g$ or more, can be, for example, 10 $m^2/g$ or less or 8 $m^2/g$ or less and may be 5 $m^2/g$ or more and 10 $m^2/g$ or less, or 6 $m^2/g$ or more and 8 $m^2/g$ or less.

The median size of the powder composition of the present embodiment can be, for example, 0.4 $\mu m$ or more, 0.5 $\mu m$ or more, or 0.6 $\mu m$ or more, can be, for example, 1.0 $\mu m$ or less, 0.8 $\mu m$ or less, or 0.7 $\mu m$ or less and may be 0.4 $\mu m$ or more and 1.0 $\mu m$ or less, 0.5 $\mu m$ or more and 0.8 $\mu m$ or less, or 0.6 $\mu m$ or more and 0.7 $\mu m$ or less.

The particle size ratio of the powder composition of the present embodiment may be 0.9 or more and 1.5 or less, or 0.95 or more and 1.1 or less. The volume average size of the powder composition of the present embodiment can be similar to the median size, may be, for example, 0.4 $\mu m$ or more or 0.5 $\mu m$ or more, may be, for example, 1.0 $\mu m$ or less or 0.8 $\mu m$ or less and is preferably 0.4 $\mu m$ or more and 1.0 $\mu m$ or less, or 0.5 $\mu m$ or more and 0.8 $\mu m$ or less. Note that the volume average size is preferably larger than the median size.

The absolute value of the standard deviation of the powder composition of the present embodiment may be 0.2 $\mu m$ or less or 0.18 $\mu m$ or less, may be more than 0 $\mu m$ or 0.05 $\mu m$ or more and can be, for example, more than 0 $\mu m$ and 0.2 $\mu m$ or less, or 0.05 $\mu m$ or more and 0.18 $\mu m$ or less.

The monoclinic phase fraction of the powder composition of the present embodiment may be 25% or more or 40% or more, may be 60% or less or 50% or less and can be, for example, 25% or more and 60% or less, or 40% or more and 50% or less.

As long as the powder composition has such features, any content ratio of the powder of the present embodiment to the synthetic powder is employed; but the mass ratio of the synthetic powder in the powder composition of the present embodiment is preferably 0.2 or more, 0.3 or more, or 0.5 or more, is preferably less than 1.0, 0.9 or less, or 0.8 or less and may be 0.2 or more and less than 1.0, 0.3 or more and 0.9 or less, 0.5 or more and 0.9 or less, or 0.5 or more and 0.8 or less.

The powder composition of the present embodiment is obtained by a production method including a mixing step of mixing the powder of the present embodiment and a powder of zirconia having a BET specific surface area relative to the median size of more than 12 $m^2/(g \cdot \mu m)$. The powder of zirconia having a BET ratio of more than 12 $m^2/(g \cdot \mu m)$ (hereafter also referred to as an "addition powder") can be a synthetic powder or a commercially available powder of zirconia.

Any mass ratio [mass%] of the powder of the present embodiment in the powder composition of the present embodiment is employed; but the powder of the present embodiment relative to 100 mass% of the total of the addition powder and the powder of the present embodiment can be 5 mass% or more, 10 mass% or more, 30 mass% or more, or 50 mass% or more.

The mixing in the mixing step can be performed by any method by which the addition powder and the powder of the present embodiment become homogeneous, may be at least one of wet mixing and dry mixing, is preferably wet mixing, more preferably either stirring mill mixing or ball mill mixing and still more preferably ball mill mixing.

[Production method for powder]

The powder of the present embodiment can be obtained by a production method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment (hereafter also referred to as a "production method of the present embodiment").

The production method of the present embodiment comprises a hydrothermal treatment step. As a result of the hydrothermal treatment step, the sintered body after the hydrothermal treatment is a solid material having reduced mechanical strength (hereafter also referred to as "sintered body flakes" or simply "flakes"). This solid material, which is easily handled compared with gel and the like in a highly flowable state, can be used in the subsequent deagglomeration step and the deagglomeration facilitates dispersion of crystal grains with their shapes being maintained.

The shape and size of the sintered body flakes vary depending on the shape, size, and the like of the sintered body used in the hydrothermal treatment step (hereafter also referred to as a "raw material sintered body"). The sintered body flakes may have a maximum length of 10 mm or less, or 5 mm or less. The shape of the sintered body flakes may be a scale-like sintered body piece and may be at least one of a polyhedral shape and an irregular shape.

A zirconia sintered body is used in the hydrothermal treatment step. The shape of the raw material sintered body may be any shape and may be one or more selected from the group consisting of spherical, substantially spherical, elliptical, disk-shaped, cylindrical, cubic, rectangular parallelepiped, polyhedral and substantially polyhedral shapes. The sintered body used in the hydrothermal treatment step may be a sintered body having a thickness of 1 mm or more, may be a sintered body having a thickness of 3 mm or more, is preferably a sintered body having a thickness of 1 mm or more and 10 mm or less and can be a sintered body having a thickness of 3 mm or more and 5 mm or less. The production method of the present embodiment can disperse crystal grains of even such a thick sintered body and can convert the sintered body into powder.

The production method of the present embodiment is suitable for recycling a sintered body that is difficult to pulverize. Thus, the raw material sintered body may have a three-point bending strength of 1000 MPa or more, 1100 MPa or more, or 1200 MPa or more. The upper limit of the three-point bending strength of the raw material sintered body may be 1600 MPa or less or 1500 MPa or less. The three-point bending strength of the raw material sintered body may be 1000 MPa or more and 1600 MPa or less, 1100 MPa or more and 1500 MPa or less, or 1200 MPa or more and 1500 MPa or less.

The raw material sintered body is preferably a sintered body having tetragonal zirconia as the main phase and the fraction of a monoclinic phase in the crystalline phase (monoclinic phase fraction) is preferably 5% or less and more preferably 3% or less; the monoclinic phase fraction may be 0% or more and 5% or less, 0% or more and 3% or less, or 0% or more and 2% or less.

The raw material sintered body can have a formulation similar to that of the above-described powder of the present embodiment and is preferably a zirconia sintered body in which the zirconia is zirconia containing a stabilizing element.

The stabilizing element can be any element that stabilizes the crystalline phase of zirconia, may be, for example, one or more from the group consisting of yttrium, magnesium, calcium, cerium, gadolinium and erbium, is preferably one or more selected from the group consisting of yttrium, magnesium, calcium, gadolinium and erbium, more preferably at least one of yttrium and gadolinium, preferably includes yttrium and more preferably is yttrium alone.

The stabilizing element amount can be an amount at which the crystalline phase of zirconia is stabilized in at least one of a tetragonal phase and a cubic phase, and can be, for example, 1 mol% or more and 10 mol% or less, or 1.6 mol% 4.5 mol% or less. The yttrium amount is preferably 1.5 mol% or more, 2 mol% or more, or 2.5 mol% or more, preferably less than 6 mol%, 5.5 mol% or less, or 3.8 mol% or less and preferably 1.5 mol% or more and less than 6 mol%, 2 mol% or more and 5.5 mol% or less, or 2.5 mol% or more and 3.8 mol% or less.

The raw material sintered body may contain an additive component and the additive component is preferably alumina. The additive component amount may be 0 mass% or more, more than 0 mass% or 0.01 mass% or more, may be 0.5 mass% or less, 0.1 mass% or less, or 0.75 mass% or less and can be, for example, 0 mass% or more and 0.75 mass% or less, more than 0 mass% and 0.75 mass% or less, or 0.01 mass% or more and 0.5 mass% or less. On the other hand, for the same reasons as described above, the raw material sintered body preferably does not contain the additive component (the additive component amount is 0 mass%) and more preferably does not contain at least silica. The silica amount of the raw material sintered body in consideration of measurement error and the like can be, for example, 0 mass% or more and 0.01 mass% or less, or 0 mass% or more and 0.005 mass% or less. The additive component amount of the raw material sintered body can be, for example, 0 mass% or more and 0.3 mass% or less, 0 mass% or more and 0.2 mass% or less, 0 mass% or more and 0.1 mass% or less, or 0 mass% or more and less than 0.05 mass%.

Water used in the hydrothermal treatment can be pure water.

In the hydrothermal treatment step, hydrothermal treatment is performed at a hydrothermal treatment temperature of 150°C or more and 400°C or less. When the hydrothermal treatment temperature is less than 150°C, the hydrothermal treatment requires a very long time and thus the treatment cannot be completed within a practical time. On the other hand, when the hydrothermal treatment temperature exceeds 400°C, a general-purpose hydrothermal treatment apparatus cannot be used and crystal grains themselves are likely to collapse or dissolve. In either case, application as an industrial recycling method becomes difficult. The hydrothermal treatment temperature may be 150°C or more or 180°C or more, may be 400°C or less, 350°C or less, or 300°C or less and is preferably 150°C or more and 400°C or less, or 180°C or more and 300°C or less.

The hydrothermal treatment is performed in a sealed state with the sintered body and water. Therefore, the hydrothermal treatment is performed under autogenous pressure.

In the hydrothermal treatment step, hydrothermal treatment is performed with a mass ratio of water to the sintered body (hereafter also referred to as a "solid-liquid ratio") of 1.5 or less. In the hydrothermal treatment step, heating in the closed system brings water in a vaporized state into contact with the sintered body. Thus, a change in the sintered body inferentially proceeds appropriately to reduce the strength of crystal grain boundaries (interfaces) between crystal grains before collapse or dissolution of the crystal grains themselves. Accordingly, crystal grains are inferentially in a state of being easily dispersed by deagglomeration. When the solid-liquid ratio exceeds 1.5, generation of water vapor and contact with the sintered body become insufficient. As a result, the mechanical strength of the sintered body does not decrease and thus crystal grains cannot be dispersed from each other in the subsequent deagglomeration step. In order to make the interface strength of sintered body flakes obtained by the hydrothermal treatment more uniform, the solid-liquid ratio is preferably 1.5 or less, 1.0 or less, or 0.75 or less. The solid-liquid ratio can be any ratio as long as sufficient contact between the sintered body and water vapor occurs, can be 0.1 or more or 0.25 or more and is preferably 0.1 or more and 1.5 or less, 0.1 or more and 1.0 or less, or 0.25 or more and 0.57 or less.

The hydrothermal treatment may be performed while stirring or standing the zirconia sintered body. In order to provide sintered body flakes having improved handling properties, the hydrothermal treatment is preferably performed while standing the sintered body.

The time of the hydrothermal treatment can be appropriately adjusted depending on the amount of the sintered body used in the hydrothermal treatment and performance of the hydrothermal treatment apparatus; but the time that is preferred for an industrial recycling method can be, for example, 20 hours or more, 50 hours or more, or 70 hours or more, can be 300 hours or less, 150 hours or less, 120 hours or less, or 100 hours or less and may be 20 hours or more and 300 hours or less, or 50 hours or more and 100 hours or less.

As necessary, the sintered body (sintered body flakes) after the hydrothermal treatment may be recovered by solid-liquid separation and dried. Unlike gel and the like, the sintered body flakes are sintered body pieces on the order of millimeters and are easily subjected to solid-liquid separation; thus, the methods for performing the solid-liquid separation and the drying are not limited. The method for performing the solid-liquid separation may be at least one of decantation and filtration and solid-liquid separation by filtration is preferred. The method for performing the drying may be drying in an air atmosphere at 80°C or more and 150°C or less.

The production method of the present embodiment comprises a deagglomeration step of deagglomerating the sintered body after the hydrothermal treatment. As a result of the deagglomeration step, crystal grains constituting the sintered body flakes are dispersed to provide the powder of the present embodiment composed of crystal grains.

In the deagglomeration step, the deagglomeration method can be any method and conditions by which grain boundaries of crystal grains can be destroyed, can be at least one of wet deagglomeration and dry deagglomeration or can be wet deagglomeration. The wet deagglomeration is preferably a method in which sintered body flakes are made into a slurry and the slurry is deagglomerated. In order to increase deagglomeration strength, for example, the deagglomeration may be performed using zirconia balls having a diameter of 0.1 mm or more and 20 mm or less. Note that, in the present embodiment, "deagglomeration" refers to a treatment for removing loose aggregation and "pulverization" refers to a treatment for destroying primary particles or crystal grains themselves.

Furthermore, in the deagglomeration step, a synthetic powder can be added during deagglomeration of the sintered body flakes to thereby provide the powder composition of the present embodiment.

The production method of the present embodiment can also be used as a method for recycling a sintered body, a method for resource recovery of a sintered body or a method for recycling a zirconia sintered body and may also be regarded as a method for recycling a sintered body, the method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

[Production method for sintered body]

The powder of the present embodiment and the powder composition of the present embodiment (hereafter also referred to as "powder and the like of the present embodiment") can each be used as a raw material for a sintered body. The sintered body can be produced by a publicly known sintering method except for using the powder and the like of the present embodiment and can be produced by a production method including a sintering step of sintering a green body including the powder and the like of the present embodiment.

The green body used in the sintering step may have any shape, can have one or more shapes selected from the group consisting of spherical, substantially spherical, elliptical, disk-shaped, cylindrical, cubic, rectangular parallelepiped, polyhedral and substantially polyhedral shapes or can have any shape according to an application or a purpose.

The green body can be prepared by molding the powder and the like of the present embodiment by an appropriate molding method. The molding method may be one or more selected from the group consisting of uniaxial pressing, cold isostatic pressing, slip casting and injection molding or may be at least one of uniaxial pressing and cold isostatic pressing.

In the sintering step, the sintering method can be an appropriate sintering method, can be, for example, one or more selected from the group consisting of normal-pressure sintering, pressure sintering and vacuum sintering and is preferably normal-pressure sintering.

Preferred sintering conditions may be the following conditions.

Sintering method: normal-pressure sintering
Sintering atmosphere: oxidizing atmosphere, preferably air atmosphere
Holding temperature: 1300°C or more, 1400°C or more, or 1450°C or more and 1700°C or less or 1600°C or less
The holding time can be appropriately changed depending on the shape of the green body used in sintering and characteristics of the sintering furnace and can be, for example, 1 hour or more and 6 hours or less, or 2 hours or more and 4 hours or less.

The sintering step provides a sintered body using a raw material obtained from a sintered body, a so-called recycled sintered body. In this way, sintered bodies can be recycled.

EXAMPLES

Hereinafter, the present disclosure will be described with reference to Examples. However, the present disclosure is not limited to these Examples.

(Crystalline phase, monoclinic phase fraction)

Using an X-ray diffractometer (apparatus name: Ultima IV, manufactured by RIGAKU Corporation), XRD measurement was performed under the following conditions to obtain an XRD pattern of a sample.

Radiation source: CuK$\alpha$ radiation ($\lambda$ = 0.15418 nm)
Measurement mode: continuous scan
Scan speed: 2°/min
Measurement range: $2\theta$ = 26° to 33°
Acceleration voltage/current: 40 mA and 40 kV
Divergence height limiting slit: 10 mm
Divergence/incident slit: 1°
Receiving slit: open
Detector: semiconductor detector (D/teX Ultra)
Filter: Ni filter
Goniometer radius: 185 mm

The crystalline phase was identified by using an analysis program provided with the X-ray diffractometer (program name: integrated powder X-ray analysis software PDXL Ver. 2.2, manufactured by RIGAKU Corporation) to perform smoothing processing and background removal processing and to subject the processed XRD pattern to profile fitting using a split pseudo-Voigt function.

The monoclinic phase fraction was determined on the basis of the XRD pattern of a powder sample or a surface of a sintered body sample by the above-described equation. Note that the sintered body sample used was a sintered body having been subjected to one-surface mirror-polishing to 1.3 ± 0.1 mm and a measurement surface roughness Ra ≤ 0.02 μm.

(BET specific surface area)

The BET specific surface area was measured using an automatic specific surface area measuring apparatus (apparatus name: TriStar II 320, manufactured by SHIMADZU CORPORATION) by a BET multipoint method (5 points) in accordance with JIS R 1626 under the following conditions.

Adsorption medium: $N_2$
Adsorption temperature: -196°C
Pretreatment conditions: degassing treatment at 250°C for 1 hour in air atmosphere

(Median size, volume average size and standard deviation)

The median size, volume average size and standard deviation were determined from a cumulative volume particle size distribution obtained by particle size distribution measurement on a volume basis by a laser diffraction and scattering method using a Microtrac particle size distribution analyzer (apparatus name: MT3300EXII, manufactured by MicrotracBEL Corp.). The measurement conditions for the particle size distribution are as follows.

Measurement range: 0.01 to 2000 μm
Particle refractive index: 2.17
Particle transmissivity: transmissive
Particle shape: non-spherical
Solvent refractive index: 1.333
Calculation mode: HRA
Measurement time: 30 seconds
Distribution: volume

The particle size ($D_{50}$ size) corresponding to a cumulative frequency of 50% in the cumulative volume particle size distribution was defined as the median size [μm] and the average size in the cumulative volume particle size distribution was defined as the volume average size [μm]. The value determined by the following equation using the particle size ($D_{16}$) corresponding to a cumulative frequency of 16% and the particle size ($D_{84}$) corresponding to a cumulative frequency of 84% in the cumulative volume particle size distribution was defined as the standard deviation [μm].

$$\text{Standard deviation [μm]} = (D_{84}\ [μm] - D_{16}\ [μm])/2$$

The sample powder was pretreated by being suspended in distilled water to form a slurry and then dispersed using an ultrasonic homogenizer (apparatus name: US-150T, manufactured by NIHONSEIKI KAISHA LTD.).

(Measured density and relative density)

The measured density of a sintered body was determined as the ratio ($g/cm^3$) of the mass measured by mass measurement to the volume measured by an Archimedes method. The relative density was determined as the ratio (%) of the measured density to the true density.

(Three-point bending strength)

The three-point bending strength was measured by a three-point bending test in accordance with JIS R 1601. The measurement was performed 10 times and the average value thereof was defined as the three-point bending strength. The measurement was performed using a column-shaped sintered body sample having a width of 4 mm and a thickness of 3 mm, with a distance between supporting points set to 30 mm.

(Hydrothermal degradation test)

A sintered body having been mirror-polished so as to have a surface roughness Ra $\leq$ 0.02 $\mu$m was used as a measurement sample and subjected to a hydrothermal degradation test of hydrothermal immersion at 134°C. The monoclinic phase fraction of the surface of the sintered body after 5 hours of immersion was determined by the above-described equation.

<Preparation of sintered bodies>

Synthesis Example 1

25 g of a commercially available zirconia powder (product name: TZ-3YS, manufactured by Tosoh Corporation) was filled into a die of 57 mm $\times$ 34 mm and subjected to uniaxial press molding at 98 MPa to obtain a green body. The obtained green body was subjected to normal-pressure sintering in an air atmosphere at 1500°C for 2 hours to obtain a rectangular parallelepiped sintered body having a thickness of 3.7 mm and composed of yttrium-stabilized zirconia having a yttrium content of 3.0 mol%, which was defined as the sintered body of this Synthesis Example.

Synthesis Example 2

The same procedures as in Example 1 were performed except that a commercially available zirconia powder (product name: TZ-2Y, manufactured by Tosoh Corporation) was used, to obtain a rectangular parallelepiped sintered body having a thickness of 3.7 mm and composed of yttrium-stabilized zirconia having a yttrium content of 2.0 mol%; thus, a zirconia sintered body was obtained.

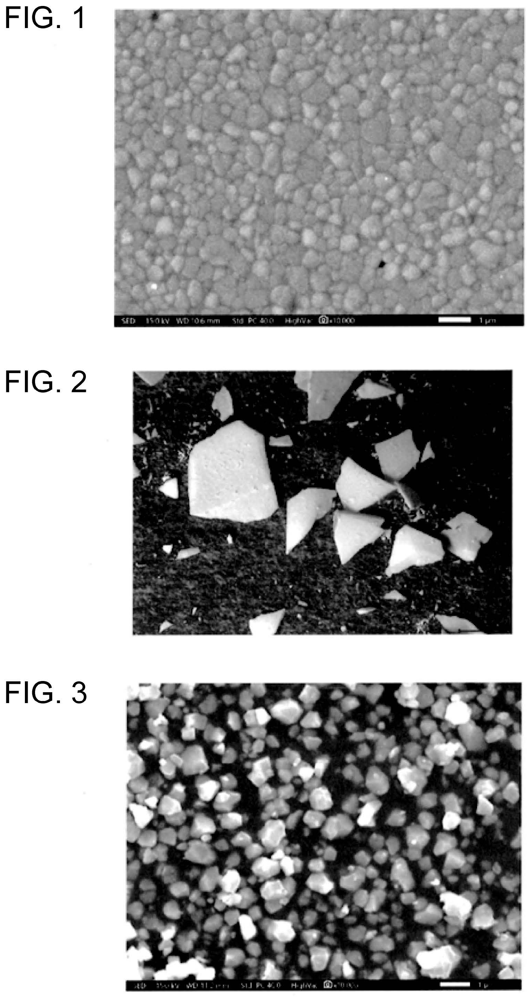

The results are described in the following table and an SEM observation image of the sintered body of Synthesis Example 1 is illustrated in Fig. 1.

Table 1

| | Formulation | Monoclinic phase fraction | Measured density [g/cm$^3$] | Average crystal grain size [$\mu$m] | Three-point bending strength [MPa] |
|---|---|---|---|---|---|
| | Y$_2$O$_3$ [mol%] | | | | |
| Synthesis Example 1 | 3.0 | $\leq$1% | 6.061 | 0.51 | 1310 |
| Synthesis Example 2 | 2.0 | $\leq$1% | 6.101 | - | 1190 |

The sintered bodies each had a monoclinic phase fraction equal to or less than the measurement limit (1% or less), which indicated that the sintered bodies were zirconia sintered bodies having a crystalline phase having tetragonal zirconia as the main phase.

Example 1

100 g of sintered bodies (4 sintered bodies) obtained by the same method as in Synthesis Example 1 and 50 mL of pure water were filled into a TEFLON (registered trademark) container having a volume of 100 mL, sealed and subjected to hydrothermal treatment under the following conditions.

Hydrothermal treatment temperature: 200°C
Hydrothermal treatment time: 72 hours
Hydrothermal treatment atmosphere: standing
Solvent/sintered body mass ratio: 0.5

After the hydrothermal treatment, cooling to room temperature was performed. After the cooling, the solid content was recovered by solid-liquid separation by filtration. The recovered solid content was dried in an air atmosphere at 110°C $\pm$ 15°C for 24 hours to obtain flakes. The obtained flakes had a thickness of 0.8 mm or less and a monoclinic phase fraction of 71%. An optical microscope observation image of the obtained flakes is illustrated in Fig. 2. The flakes were found to be a solid having a maximum length of 3 mm or less and having a scale-like or irregular shape. The obtained flakes were mixed with pure water and subjected to wet deagglomeration to obtain a slurry.

The obtained slurry was dried in an air atmosphere at 110 $\pm$ 15°C for 24 hours and then classified using a stainless steel sieve having an aperture size of 180 $\mu$m; the powder that passed through the sieve was recovered and defined as the powder of this Example.

Example 2

Flakes obtained by the same method as in Example 1 were mixed with pure water and then subjected to deagglomeration treatment for 24 hours using a ball mill using zirconia balls having a diameter of 2 mm. The same procedures as in Example 1 were performed except that the slurry after the treatment was dried and classified, to obtain the powder of this Example.

Example 3

The same procedures as in Example 1 were performed except that the sintered body of Synthesis Example 2 was used and the hydrothermal treatment time was set to 48 hours, to obtain the powder of this Example. The obtained flakes had a thickness of 0.8 mm or less and a monoclinic phase fraction of 96%.

Comparative Example 1

Zirconia balls having a diameter of 5 mm were hydrothermally treated by the method of Patent Document 2. Specifically, 100 g of balls having a diameter of 5 mm made of partially stabilized zirconia and 200 mL of pure water were added to an autoclave having a volume of 2000 mL and subjected to heat treatment at 200°C for 96 hours while stirring. The balls after the heat treatment were found to have cracks, but maintained their shapes before the hydrothermal treatment. This indicated that use of the method of Patent Document 2 cannot achieve recycling.

The results are described in the following table. In the table, Reference Example indicates measurement results of a commercially available zirconia powder (product name: TZ-3YS, manufactured by Tosoh Corporation).

Table 2

|  | Median size [$\mu$m] | Volume average size [$\mu$m] | Particle size ratio | Standard deviation [$\mu$m] | BET specific surface area [m$^2$/g] | BET ratio [m$^2$/(g·$\mu$m)] | Monoclinic phase fraction |
|---|---|---|---|---|---|---|---|
| Example 1 | 0.70 | 0.73 | 1.04 | 0.18 | 2.45 | 3.5 | 75% |
| Example 2 | 0.58 | 0.60 | 1.03 | 0.10 | 5.22 | 9.1 | 76% |
| Example 3 | 0.75 | 0.78 | 1.04 | 0.21 | 2.33 | 3.1 | 96% |
| Reference Example | 0.52 | 0.55 | 1.06 | 0.13 | 8.10 | 15.6 | 32% |

Examples 1 to 3 have indicated that zirconia sintered bodies having a three-point bending strength of 1000 MPa or more and mainly composed of tetragonal zirconia can be converted into powder. Comparison between Reference Example and Example 2 has indicated that the powder of the Example has a lower BET ratio and a higher monoclinic phase fraction. The particle sizes of the powders of Examples 1 and 2 are 1.14 times to 1.37 times the average crystal grain size (0.51 $\mu$m) of the raw material sintered body and hence are similar to the average crystal grain size, which has indicated that the crystal grains are dispersed.

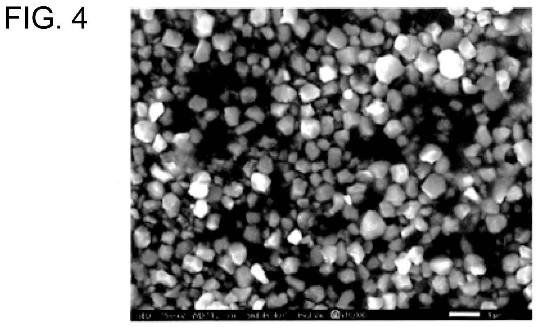

The SEM observation images of the powders of Examples 1 and 2 (Figs. 3 and 4) indicate that the powders of Examples 1 and 2 each included polyhedral particles (crystal grains). This has indicated that the powders of these Examples are powders composed of crystal grains in which crystal grains of the sintered bodies are dispersed while maintaining the shapes thereof. As compared with Example 2, a large number of particles each composed of a plurality of crystal grains were observed in the powder of Example 1. Comparison between Examples 1 and 2 has indicated that use of the ball mill causes the median size to approach the average crystal grain size of the raw material sintered body and achieves further dispersion of crystal grains.

<Production of powder compositions>

Example 4

The same procedures as in Example 1 were performed except that 10 g of flakes obtained by the same procedures as in Example 1, 90 g of a commercially available zirconia powder (product name: TZ-3YS, manufactured by Tosoh Corporation) and 122 g of pure water were mixed while being deagglomerated, to obtain the powder composition of this Example.

Example 5

The same procedures as in Example 1 were performed except that 20 g of flakes obtained by the same procedures as in Example 1, 80 g of a commercially available zirconia powder (product name: TZ-3YS, manufactured by Tosoh Corporation) and 122 g of pure water were mixed while being deagglomerated, to obtain the powder composition of this Example.

Example 6

The same procedures as in Example 1 were performed except that 50 g of flakes obtained by the same procedures as in Example 1, 50 g of a commercially available zirconia powder (product name: TZ-3YS, manufactured by Tosoh Corporation) and 122 g of pure water were mixed while being deagglomerated, to obtain the powder composition of this Example.

Example 7

20 g of a powder obtained by the same procedures as in Example 2, 80 g of a commercially available zirconia powder (product name: TZ-3YS, manufactured by Tosoh Corporation) and 122 g of pure water were mixed while being deagglomerated to obtain a slurry. The obtained slurry was dried in an air atmosphere at $110 \pm 15°C$ for 24 hours and then classified using a stainless steel sieve having an aperture size of 180 $\mu$m; the powder that passed through the sieve was recovered and defined as the powder composition of this Example.

Example 8

The same procedures as in Example 7 were performed to obtain the powder composition of this Example except that 50 g of a powder obtained by the same procedures as in Example 2, 50 g of a commercially available zirconia powder (product name: TZ-3YS, manufactured by Tosoh Corporation) and 122 g of pure water were mixed while being deagglomerated to obtain a slurry.

Comparative Example 2

The same procedures as in Example 1 were performed to obtain the powder composition of this Example except that 80 g of flakes obtained by the same procedures as in Example 1, 20 g of a commercially available zirconia powder (product name: TZ-3YS, manufactured by Tosoh Corporation) and 122 g of pure water were mixed while being deagglomerated to form a slurry.

The results are described in the following table.

Table 3

| | Median size Median size [$\mu$m] | Volume average size [$\mu$m] | Particle size ratio | Standard deviation [$\mu$m] | BET specific surface area [m$^2$/g] | BET ratio [m$^2$/(g$\cdot\mu$m)] | Monoclinic phase fraction |
|---|---|---|---|---|---|---|---|
| Example 4 | 0.57 | 0.62 | 1.09 | 0.17 | 7.85 | 13.8 | 33% |
| Example 5 | 0.58 | 0.62 | 1.07 | 0.16 | 7.56 | 13.0 | 42% |
| Example 6 | 0.63 | 0.66 | 1.05 | 0.17 | 6.13 | 9.7 | 52% |
| Example 7 | 0.57 | 0.61 | 1.07 | 0.15 | 7.60 | 13.3 | 40% |
| Example 8 | 0.58 | 0.62 | 1.07 | 0.15 | 7.23 | 12.5 | 53% |

(continued)

| | Median size Median size [μm] | Volume average size [μm] | Particle size ratio | Standard deviation [μm] | BET specific surface area [m²/g] | BET ratio [m²/(g·μm)] | Monoclinic phase fraction |
|---|---|---|---|---|---|---|---|
| Comparative Example 2 | 0.68 | 0.72 | 1.06 | 0.20 | 4.97 | 7.3 | 60% |

<Production of sintered bodies>

3 g of each of the powders obtained in Examples and Comparative example was filled into a die having a diameter of 25 mm and subjected to uniaxial pressing at a pressure of 98 MP to obtain a green body. Using a muffle furnace, the obtained green body was sintered under the following conditions to obtain a sintered body.

Temperature increase rate: 100°C/hour
Sintering temperature: 1500°C
Sintering time: 2 hours
The results are described in the following table.

Table 4

| | Sintered body density [g/cm³] | Relative density [%] | Monoclinic phase fraction | Three-point bending strength [MPa] |
|---|---|---|---|---|
| Example 4 | 6.081 | 99.7 | ≤1% | 1269 |
| Example 5 | 6.047 | 99.2 | ≤1% | 1315 |
| Example 6 | 5.956 | 97.7 | ≤1% | 1269 |
| Example 7 | 6.078 | 99.4 | ≤1% | 1261 |
| Example 8 | 6.052 | 99.2 | ≤1% | 1246 |
| Reference Example 1 | 6.085 | 99.8 | ≤1% | 1222 |
| Comparative Example 2 | 5.782 | 94.8 | ≤1% | - |

The obtained recycled powders were found to be usable as raw materials for sintered bodies. In Comparative Example 2, a sintered body was obtained, but the sintered body density was low.

The entire contents of the description, claims, drawings and abstract of Japanese Patent Application No. 2023-164193 filed on September 27, 2023, are hereby incorporated by reference as the disclosure of the description of the present disclosure.

**Claims**

1.   A powder of zirconia composed of crystal grains.

2.   The powder according to claim 1, having a BET specific surface area of 0.5 m²/g or more and 10.5 m²/g or less and a median size of 0.2 μm or more and 2.0 μm or less.

3.   The powder according to claim 1 or 2, wherein the zirconia is zirconia containing a stabilizing element.

4.   The powder according to claim 3, wherein the stabilizing element is one or more from the group consisting of yttrium, magnesium, calcium, cerium, gadolinium and erbium.

5.   The powder according to claim 3 or 4, wherein a content of the stabilizing element is 1.5 mol% or more and 6 mol% or less.

6. The powder according to any one of claims 1 to 5, having a monoclinic phase fraction of 50% or more.

7. The powder according to any one of claims 1 to 6, wherein a BET specific surface area relative to a median size is 12 $m^2/(g \cdot \mu m)$ or less.

8. The powder according to any one of claims 1 to 7, wherein the powder is a recycled powder.

9. A production method for the powder according to any one of claims 1 to 8, the production method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

10. The production method according to claim 9, wherein the zirconia sintered body is a sintered body having tetragonal zirconia as a main phase.

11. The production method according to claim 9 or 10, wherein a fraction of a monoclinic phase in a crystalline phase of the zirconia sintered body is 5% or less.

12. The production method according to any one of claims 9 to 11, wherein the zirconia sintered body has a three-point bending strength of 1000 MPa or more.

13. A method for recycling a sintered body, the method comprising a hydrothermal treatment step of subjecting a zirconia sintered body to hydrothermal treatment at a hydrothermal treatment temperature of 150°C or more and 400°C or less with a mass ratio of water to the sintered body of 1.5 or less and a deagglomeration step of deagglomerating the sintered body after the hydrothermal treatment.

FIG. 1

FIG. 2

FIG. 3

FIG. 4

## INTERNATIONAL SEARCH REPORT

| International application No. |
|---|
| **PCT/JP2024/034151** |

**A. CLASSIFICATION OF SUBJECT MATTER**

*C04B 35/486*(2006.01)i; *B09B 3/35*(2022.01)i; *B09B 3/40*(2022.01)i; *C01G 25/02*(2006.01)i
FI:  C04B35/486; C01G25/02; B09B3/40; B09B3/35

According to International Patent Classification (IPC) or to both national classification and IPC

**B. FIELDS SEARCHED**

Minimum documentation searched (classification system followed by classification symbols)

C04B35/00-C04B35/84; B09B3/35; B09B3/40; C01G25/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-263157 A (NIPPON SHOKUBAI CO., LTD.) 12 November 2009 (2009-11-12) claims, paragraphs [0038]-[0062] | 1-8 |
| A | | 9-13 |
| X | JP 10-218662 A (TORAY IND INC.) 18 August 1998 (1998-08-18) claims, paragraphs [0027]-[0041] | 1-13 |
| Y | | 9-13 |
| Y | CN 106946576 A (CHAOZHOU THREE-CIRCLE (GROUP) CO., LTD.) 14 July 2017 (2017-07-14) paragraphs [0023], [0039] | 9-13 |
| A | | 1-8 |
| Y | JP 2009-286657 A (NIPPON SHOKUBAI CO., LTD.) 10 December 2009 (2009-12-10) paragraph [0067] | 9-13 |
| A | | 1-8 |

☑ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **31 October 2024** | **19 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/034151** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2012-250894 A (NIPPON SHOKUBAI CO., LTD.) 20 December 2012 (2012-12-20) | 1-13 |
| A | KR 10-1533530 B1 (KIM, KWANG IL) 02 July 2015 (2015-07-02) | 1-13 |

Form PCT/ISA/210 (second sheet) (July 2022)

## INTERNATIONAL SEARCH REPORT
### Information on patent family members

International application No.

**PCT/JP2024/034151**

| Patent document cited in search report | | | Publication date (day/month/year) | Patent family member(s) | Publication date (day/month/year) |
|---|---|---|---|---|---|
| JP | 2009-263157 | A | 12 November 2009 | (Family: none) | |
| JP | 10-218662 | A | 18 August 1998 | (Family: none) | |
| CN | 106946576 | A | 14 July 2017 | (Family: none) | |
| JP | 2009-286657 | A | 10 December 2009 | (Family: none) | |
| JP | 2012-250894 | A | 20 December 2012 | (Family: none) | |
| KR | 10-1533530 | B1 | 02 July 2015 | (Family: none) | |

Form PCT/ISA/210 (patent family annex) (July 2022)

**REFERENCES CITED IN THE DESCRIPTION**

**Patent documents cited in the description**

- JP 2009263157 A
- JP H10218662 A
- JP 2023164193 A